# EUROPEAN PATENT APPLICATION

(11) **EP 3 543 570 A1**
(43) Date of publication of application: **25.09.2019**
(21) Application number: 17872253.4
(22) Date of filing: 15.11.2017
(51) Int. Cl.: F16J 15/38, F04D 29/12, F16J 15/36

(54) **MECHANICAL SEAL**

(30) Priority: 16.11.2016 JP 2016223617
(71) Applicant: Eagle Industry Co., Ltd., Minato-ku Tokyo 105-8587 (JP)
(72) Inventor: INOUE Hiroki, Tokyo 105-8587 (JP); NEGISHI Yuta, Tokyo 105-8587 (JP); KOSUGI Sayaka, Tokyo 105-8587 (JP); INOUE Hideyuki, Tokyo 105-8587 (JP); HOSOE Takeshi, Tokyo 105-8587 (JP)
(74) Representative: WSL Patentanwälte Partnerschaft mbB
(86) International application number: PCT/JP2017/041032
(87) International publication number: WO 2018/092792

(57) **Abstract**

A mechanical seal is provided that makes it easy for a spring to fulfill its function.

The mechanical seal includes a housing 2 through which a rotary shaft 4 of a rotary machine is inserted, a stationary sealing ring 10 held on the housing 2, a rotary sealing ring 20 that is rotatable together with the rotary shaft 4 and comes into sliding contact with the stationary sealing ring 10, a spring 40 configured to axially urge the stationary sealing ring 10 and the rotary sealing ring 20 to a pressurized state, and a spring cover 60 formed into an annular shape, covering the spring 40 in an axially sealed manner on an outer diameter side or an inner diameter side and having an annular elastic body formed in an elastically deformable manner.

## Description

### {TECHNICAL FIELD}

The present invention relates to a mechanical seal used in various types of rotary machinery such as electric motors, engines, pumps, agitators, powder machines, and compressors to inhibit leakage of sealed fluid.

### {BACKGROUND ART}

A conventional mechanical seal includes a rotary sealing ring axially movable via a spring or the like according to wear of a sealing face and an axially immovable stationary sealing ring, serving to inhibit leakage of sealed fluid at the sealing face, which is approximately perpendicular to the axis and rotates in a relative manner. In the mechanical seal described in Patent Citation 1, an airtight space for arrangement of a spring therein is formed as a structure for a rotation-side retainer to extend out into the machine. By a radially expandable/retractable synthetic resin spiral packing or the like wound two turns or less on the rotation-side retainer, fluid and/or slurry leaking from the sealing face are made less likely to flow into the airtight space in which the spring is arranged (see Patent Citation 1, for example).

### {CITATION LIST}

### {Patent Literature}

Patent Citation 1: JP H6-29565 Y (Page 2, FIG. 1)

### {SUMMARY OF INVENTION}

### {Technical Problem}

In Patent Citation 1, the rotation-side retainer is a member axially movable together with the rotary sealing ring, a portion of the member extends out into the machine relative to the spring on an outer diameter side, and the extending portion is in contact with an O-ring arranged in an annular recessed portion that is provided on an outer periphery of a collar. When the rotation-side retainer then moves axially with, for example, wear of the rotary sealing ring and/or the stationary sealing ring, the extending portion, which has a structure for axially sliding an upper portion of the O-ring, may be inclined or the rotation-side retainer cannot move smoothly axially with, for example, adhesion of the O-ring, which makes it difficult for the spring to sufficiently fulfill its potential function, resulting in poor following capability of the rotary sealing ring. In addition, since the rotation-side retainer is in a cantilevered form extending out into the machine and holds in its base the rotary sealing ring, an external force caused by, for example, a change in the pressure within the machine to result in an inclination with respect to the axis may cause a force to act to incline the sealing face of the rotary sealing ring, which makes it difficult for the spring to fulfill its potential function.

The present invention has been made in view of the foregoing problems, and an object thereof is to provide a mechanical seal that makes it easy for a spring to fulfill its function.

### {Solution to Problem}

In order to solve the foregoing problems, a mechanical seal according to a first aspect of the present invention includes:
a housing through which a rotary shaft of a rotary machine is inserted;
a stationary sealing ring held on the housing;
a rotary sealing ring that is rotatable together with the rotary shaft and comes into sliding contact with the stationary sealing ring;
a spring configured to axially urge the stationary sealing ring and the rotary sealing ring to a pressurized state; and
an spring cover formed into an annular shape, covering the spring in an axially sealed manner on an outer diameter side or an inner diameter side and at least having an annular elastic body formed in an elastically deformable manner.

According to the first aspect, even when a member urged by the spring may move in an axial direction of the rotary shaft with, for example, wear of the stationary sealing ring and/or the rotary sealing ring, the spring cover can be elastically deformed in the axial direction of the rotary shaft to smoothly follow expansion and retraction of the spring, which makes it possible for the spring to fulfill its potential function. Also, even when an external force may act on the spring cover in a radial direction, the spring cover can be elastically deformed and therefore a force causing an inclination with respect to an axis of the rotary sealing ring can hardly occur at a portion where the spring cover is mounted.

In the mechanical seal according to a second aspect of the present invention, the spring cover is formed by an annular elastic member.

According to the second aspect, the spring cover can thus be formed by a single member to have a simplified structure with high axial expansion and retraction. The spring cover can also be mounted with no significant change in, for example, the shape of each component of a conventional mechanical seal.

In the mechanical seal according to a third aspect of the present invention, the spring cover has two annular rigid bodies arranged in an axially spaced manner, in addition to the annular elastic body, the annular elastic body being provided between and hermetically to the two annular rigid bodies, the two annular rigid bodies being sealed with a secondary seal on each end portion of the spring.

According to the third aspect, the spring cover can be composed of three members, that is, the two annular rigid bodies and the annular elastic body so as to be easily mounted and dismounted. The spring cover can also be mounted with no significant change in, for example, a shape of each component of a conventional mechanical seal.

In the mechanical seal according to a fourth aspect of the present invention, the annular rigid bodies each has a flange portion extending in a radial direction, and the annular elastic body has two groove portions each loosely fitting to the flange portion of each of the annular rigid bodies in the axial direction of the rotary shaft and is fixed to the annular rigid bodies axially outward of the groove portions.

According to the fourth aspect, when the annular elastic body expands in the axial direction of the rotary shaft, the flange portion can move axially within the groove portion, whereby it is possible to ensure an extended area within which the annular elastic body expands, and also the flange portion serves as an axial retainer for the annular elastic body.

In the mechanical seal according to a fifth aspect of the present invention, both end portions of the annular elastic body is fixed to the annular rigid bodies by a band.

According to the fifth aspect, the annular elastic body and a fastened member can be fixed easily in a sealed manner without a secondary seal such as an additional O-ring.

In the mechanical seal according to a sixth aspect of the present invention, the annular elastic body has a cylindrical portion parallel to an axis of the rotary sealing ring.

According to the sixth aspect, since the cylindrical portion, which is parallel to the axis, cannot be axially concavo-convex even when extending in the axial direction of the rotary shaft, no foreign matter can be caught in the cylindrical portion.

In the mechanical seal according to a seventh aspect of the present invention, a space between the spring cover and the spring is filled with filler fluid such as oil, grease, or water.

According to the seventh aspect, since a space between the spring cover and the spring is filled with filler fluid, a foreign matter is less likely to get into a clearance gap within the spring to impair functions of the spring.

In the mechanical seal according to an eighth aspect of the present invention, the annular elastic body is provided with an injection portion that is radially thickened and allows filler fluid to be injected into the annular elastic body.

According to the eighth aspect, inserting a needle-like item into the filler fluid injecting portion allows the filler fluid to be supplied without mounting and dismounting the spring cover.

In the mechanical seal according to a ninth aspect of the present invention, the spring and the spring cover are provided on the outside of the rotary machine.

According to the ninth aspect, it is possible to inhibit entrance of dust and the like from outside the machine.

In the mechanical seal according to a tenth aspect of the present invention, one end of the spring cover is fixed in a liquid-tight manner to the rotary shaft or the housing.

According to the tenth aspect, it is possible to increase the sealing performance with the rotary shaft or the housing.

In the mechanical seal according to an eleventh aspect of the present invention, the annular elastic body is made of rubber.

According to the eleventh aspect, the elasticity of the annular elastic body is increased.

### {BRIEF DESCRIPTION OF DRAWINGS}

FIG. 1 is an overall cross-sectional view showing a mechanical seal according to a first embodiment of the present invention.
FIG. 2 is a perspective view of a seal ring-side member before a spring cover is mounted in the first embodiment.
FIG. 3 is a perspective view of the spring cover in the first embodiment.
FIG. 4 is a perspective view of the seal ring-side member in the first embodiment.
FIG. 5 is a cross-sectional view for illustrating a method of manufacturing the spring cover in the first embodiment.
FIG. 6 is an overall cross-sectional view showing a mechanical seal according to a second embodiment of the present invention.
FIG. 7 is an overall cross-sectional view showing a mechanical seal according to a third embodiment of the present invention.
FIG. 8 is an overall cross-sectional view showing a mechanical seal according to a fourth embodiment of the present invention.
FIG. 9 is an overall cross-sectional view showing a mechanical seal according to a fifth embodiment of the present invention.
FIG. 10 is a cross-sectional view showing the spring cover (a) before expansion and (b) after expansion in the fifth embodiment.

### {DESCRIPTION OF EMBODIMENTS}

Modes for embodying a mechanical seal according to the present invention will hereinafter be described based on the embodiments. It is noted that the present invention should not be construed as being limited to the modes and, based on the knowledge of one of ordinary skill in the art, various changes, variations, and modifications may be made without departing from the scope of the present invention.

### FIRST EMBODIMENT

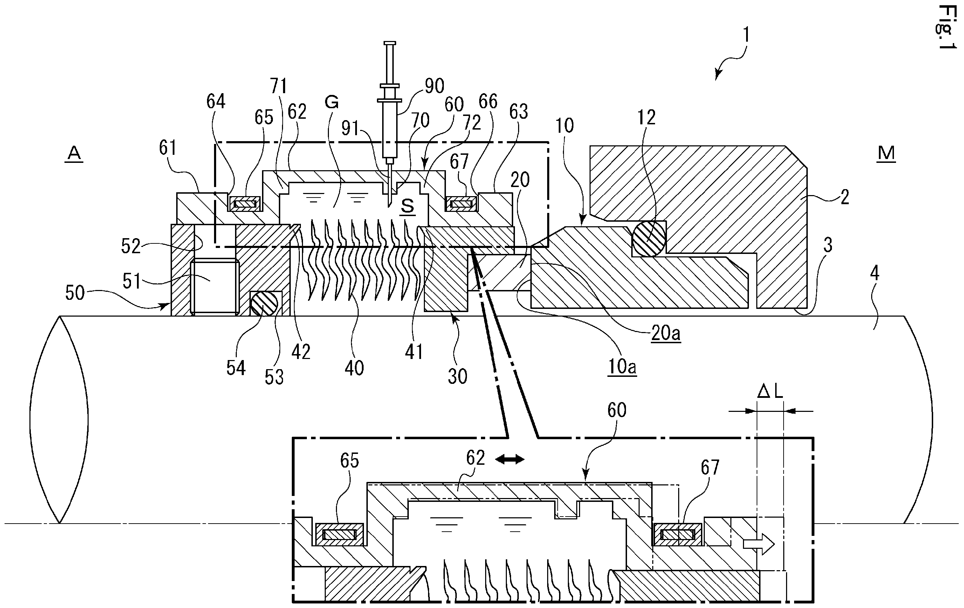

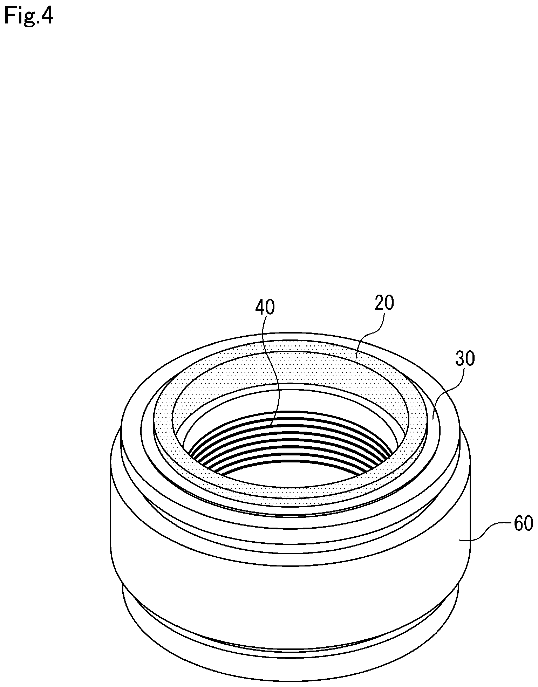

As shown in FIGS. 1 to 4, a mechanical seal 1 mainly consists of a mating ring 10 (stationary sealing ring), a seal ring 20 (rotary sealing ring), a seal ring retainer 30, a bellows 40 (spring), a collar 50, and a rubber spring cover 60 (spring cover). The mechanical seal 1 is mounted between a housing 2 of a rotary machine and a rotary shaft 4 arranged in a manner passing through an axial hole 3 in the housing 2 to communicate with an outside A of the rotary machine. The outside A is in an atmosphere of seawater, water, air, etc., while sealed fluid is encapsulated in an inside M of the rotary machine.

The mating ring 10 is mounted via an O-ring 12 not to rotate with respect to the housing 2. The seal ring 20 is mounted on the rotary shaft 4 side to rotate integrally with the rotary shaft 4. The mating ring 10 and the seal ring 20 are arranged in a manner opposed to each other in the axial direction of the rotary shaft 4, and the opposed faces form sliding surfaces 10a, 20a in close contact with each other to seal sealed fluid. That is, the mechanical seal 1 is an outside type one in which leakage of sealed fluid from the inner diameter side to the outer diameter side is inhibited.

Both the mating ring 10 and the seal ring 20 are formed of hard sliding material (e.g. ceramics such as SiC).

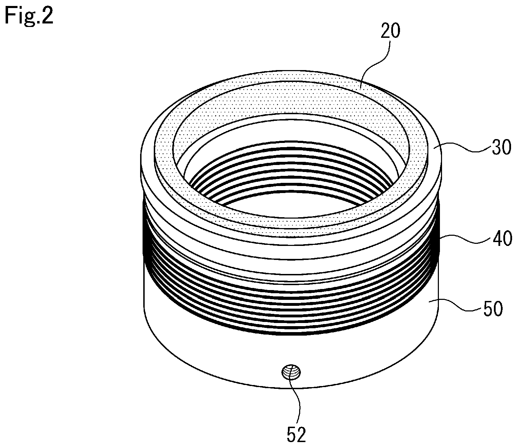

Referring to FIGS. 1 and 2, the seal ring 20 is mounted through shrinkage fitting via, for example, a well-known knock pin not shown not to rotate with respect to the seal ring retainer 30. The bellows 40 is made of metal (e.g. stainless steel), has an annular accordion form, and is arranged in a compressed state between the seal ring retainer 30 and the collar 50, the end portions 41, 42 thereof being welded in a liquid-tight manner to the seal ring retainer 30 and the collar 50. The collar 50 is fixed with a set screw 51 threadably fitted into a screw hole 52 therein not to rotate with respect to the rotary shaft 4, in the inner periphery of which an O-ring 54 is mounted in an annular recessed portion 53 recessed toward the outer diameter side.

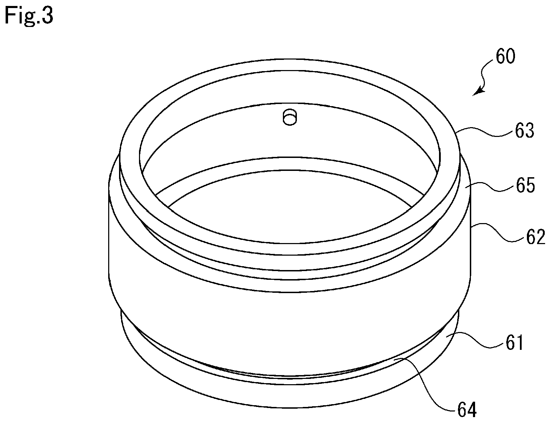

The rubber spring cover 60 (spring cover, annular elastic body) is formed of silicone rubber and has a cylindrical shape (FIGS. 1 and 3), formed from three portions consisting of, that is, a thickened fixed portion 61, a thinned expanding/retracting portion 62 (cylindrical body parallel to an axis of the seal ring 20) arranged in a manner opposed to the bellows 40, and a thickened fixed portion 63 from the outside A in the axial direction of the rotary shaft 4. An airtight space S between an inner periphery of the rubber spring cover 60 and an outer periphery of the bellows 40 is filled with grease G (filler fluid), and an inner peripheral side of the bellows 40 is in an atmosphere of the inside M. It is noted that the airtight space S is defined by the outer periphery of the bellows 40, a portion of the seal ring retainer 30, a portion of the inner periphery of the rubber spring cover 60, and a portion of the collar 50.

The fixed portion 61 of the rubber spring cover 60 is formed to have an inner diameter approximately equal to an outer diameter of the collar 50 and is fixed, through fastening of a clamping band 65 (band) arranged in an annular band groove 64 that is recessed in the outer periphery toward the inner diameter side, not to rotate with respect to the collar 50. Similarly, the fixed portion 63 is formed to have an inner diameter approximately equal to an outer diameter of the seal ring retainer 30 and is fixed, through fastening of a clamping band 67 (band) arranged in an annular band groove 66 that is recessed in the outer periphery toward the inner diameter side, not to rotate with respect to the seal ring retainer 30. The clamping bands 65, 67, which are fastened within the respective annular band grooves 64, 66, can be positioned easily in the axial direction of the rotary shaft 4 and prevented from being displaced in the axial direction of the rotary shaft.

The expanding/retracting portion 62 is formed with thickened portions 70, 71, 72 (filler fluid injection portions) protruding on an inner periphery toward an inner diameter side (spring side). An injection needle 91 of a grease injector 90 can be inserted into the thickened portions 70, 71, 72 to inject grease into the airtight space S. This allows grease G to be supplied without mounting and dismounting the rubber spring cover 60. Also, since the rubber spring cover 60 is formed of silicone rubber, when the injection needle 91 is pulled out, an opening is closed through elastic recovery. Further, since the thickened portions 71, 72 are provided in axial end portions of the airtight space S, that is, in axial end portions of the expanding/retracting portion 62, vertical rotary equipment can also be accommodated in which the rotary shaft 4 is arranged vertically.

Referring to the enlarged view in FIG. 1, with, for example, wear of the mating ring 10 and/or the seal ring 20, the seal ring 20 and the seal ring retainer 30 moves a short length ΔL as the bellows 40 expands slightly. Here, the rubber spring cover 60 is fastened and fixed at both end portions thereof by the clamping bands 65, 67. An axial tensile force therefore acts axially on the rubber spring cover 60 with the portions fastened by the clamping bands 65, 67 serving as a site of action, resulting in that the expanding/retracting portion 62 expands a length ΔL in the axial direction of the rotary shaft 4. Since the rubber spring cover 60 thus expands, the expanding function of the bellows 40 cannot be impaired.

On the other hand, even when a radial external force may act on the rubber spring cover 60, the rubber spring cover 60 itself is deformed in the radial direction, and therefore a force causing an inclination with respect to an axis of the sealing ring 20 hardly occur at the fixed portion 61 of the rubber spring cover 60.

Next will be described a method of manufacturing the rubber spring cover 60.

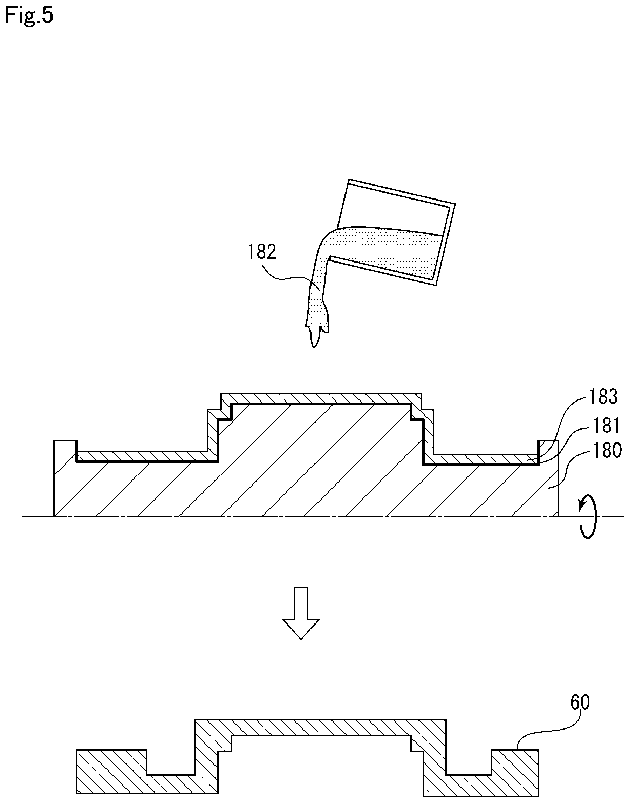

Referring to FIG. 5, a rotary mold 180 following an outline of the inner periphery of the rubber spring cover 60 is applied with a mold release agent 181. While the rotary mold 180 is then rotated, a silicone rubber 182 is poured so that a silicone rubber 183 is stacked on the rotary mold 180. A stacking step is repeated until the silicone rubber 183 has at each site a desired axial thickness to manufacture the rubber spring cover 60.

As described heretofore, the rubber spring cover 60 covers the bellows 40 on the outer diameter side in a liquid-tight manner and is detachably fixed to the seal ring retainer 30 and the collar 50, while the seal ring 20 and the seal ring retainer 30 are arranged to be axially movable on an inner diameter side of the rubber spring cover 60. Since the rubber spring cover 60 is thus provided, a foreign matter can be inhibited from being mixed into the airtight space S and, as a result, can be made less likely to be caught in an accordion portion on the outer periphery of the bellows 40 and/or to, for example, decay the bellows 40 itself. The bellows 40, which itself also serves as a secondary seal for the airtight space S, can have a simplified structure. Further, the rubber spring cover 60 can be deformed elastically in the axial direction of the rotary shaft 4 to smoothly follow the expansion and retraction of the bellows 40, which makes it possible for the spring to fulfill its potential function. Furthermore, the expanding/retracting portion 62 of the rubber spring cover 60 can undergo in a radial deflection to absorb a change in the pressure within the airtight space S. In addition, even when a radial external force may act on the rubber spring cover 60, a force causing an inclination with respect to an axis of the seal ring 20 can hardly occur at the portion where the rubber spring cover 60 is mounted because the rubber spring cover 60 is elastically deformable.

The expanding/retracting portion 62 of the rubber spring cover 60 also has a cylindrical shape parallel to an axis of the seal ring 20. This cannot be axially concavo-convex even when extending in the axial direction of the rotary shaft 4, so that no foreign matter can be caught in the expanding/retracting portion 62.

Also, since the airtight space S is filled with grease G, a foreign matter is less likely to be mixed into the airtight space S and would have limited movement in a viscous grease G, being less likely to get into the clearance gap of the bellows 40 to impair functions of the spring.

Also, since the rubber spring cover 60 is fixed mountably and dismountably by the clamping bands 65, 67, the mechanical seal 1 can be assembled and disassembled at high workability. The rubber spring cover 60 can also be mounted with no significant change in, for example, the shape of each component of a conventional mechanical seal.

Also, since the rubber spring cover 60 has a cylindrical shape, the outer periphery is less concavo-convex and therefore, upon rotation, the rubber spring cover 60 can hardly be a rotational resistance.

Also, since the bellows 40 and the rubber spring cover 60 are provided on the outside A of the rotary machine, it is possible to inhibit entrance of dust and the like from the outside A.

### SECOND EMBODIMENT

A second embodiment of the present invention will hereinafter be described. The second embodiment differs from the first embodiment mainly in that the rubber spring cover 260 has a cup shape. It is noted that arrangements identical to those in the first embodiment will not be described.

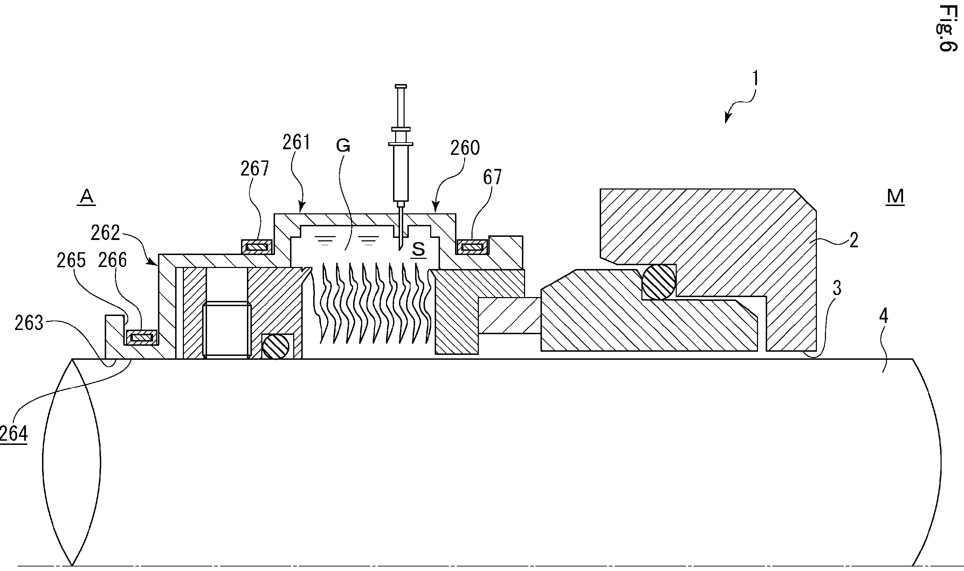

As shown in FIG. 6, the rubber spring cover 260 (seal cover, annular elastic body) is made of silicone rubber and has an approximately cup shape formed of a cylindrical portion 261 and a bottom portion 262, and an opening 263 is provided at a center of the bottom portion 262. An annular recessed portion 265 recessed toward the outer diameter side is provided in an outer periphery of the bottom portion 262. A clamping band 266 (band) is arranged and fastened within the annular recessed portion 265 to provide sealing between the inner peripheral surface 264 and the rotary shaft 4. This increases the sealing performance with the rotary shaft 4 as well as increases the sealing performance to the set screw 51 and the collar 50.

Also, a site of the cylindrical portion 261 opposed to the outer periphery of the collar 50 is fastened by a clamping band 267 for stable mounting of the rubber spring cover 260. It is noted that the clamping band 267 may not necessarily be arranged. Also, the rubber spring cover 260, which has a cup shape and has corner portions on an inside of the cylindrical portion 261 and the bottom portion 262, can be aligned easily with the collar 50. It is noted that the cylindrical portion 261 has approximately the same arrangement as the rubber spring cover 60 in the first embodiment and will not be described.

### THIRD EMBODIMENT

A third embodiment of the present invention will hereinafter be described. The third embodiment differs from the first embodiment mainly in that a coil spring 340 is provided instead of the bellows 40. It is noted that arrangements identical to those in the first embodiment will not be described.

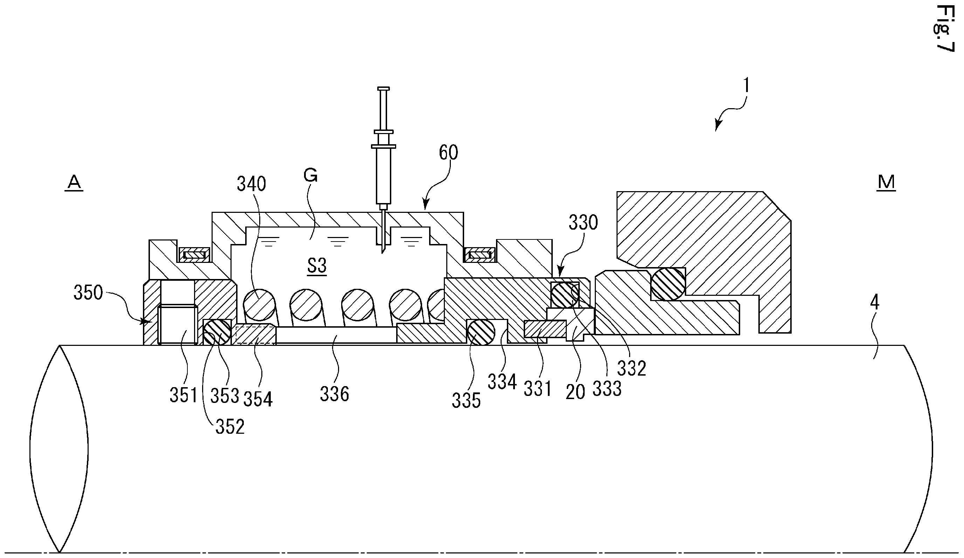

As shown in FIG. 7, the seal ring 20 is mounted via a knock pin 331 not to rotate with respect to a seal ring retainer 330. The coil spring 340 is made of metal and arranged between the seal ring retainer 330 and a collar 350 in a pressurized state. An annular recessed portion 332 recessed toward the inner diameter side is formed in an outer periphery of the seal ring retainer 330, and an O-ring 333 is arranged within the annular recessed portion 332. An annular recessed portion 334 recessed toward the outer diameter side is formed in an inner periphery of the seal ring retainer 330, and an O-ring 335 is arranged within the annular recessed portion 334.

An annular recessed portion 352 recessed toward the outer diameter side is formed in an inner periphery of the collar 350 and an O-ring 353 is arranged within an annular recessed portion 352 to increase the sealing performance with the rotary shaft 4. The collar 350 is fixed by a set screw 351 to the rotary shaft 4 via the O-ring 353 in a liquid-tightly manner.

The airtight space S3 in which the coil spring 340 is arranged is filled with grease G. It is noted that the airtight space S3 is defined by the O-ring 333, a portion of the seal ring retainer 330, a portion of the inner periphery of the rubber spring cover 60, a portion of the collar 350, and a portion of the rotary shaft 4.

Nail pieces 336 extending through the coil spring 340 closer to the collar 350 than the annular recessed portion 334 are arranged circumferentially at regular intervals on the seal ring retainer 330 and are fitted into an axial recessed portion 354 provided in the collar 350. Since the nail pieces 336 are thus movable axially with respect to the axial recessed portion 354, while has limited rotational movement, the torque of the rotary shaft 4 is to be transmitted to the seal ring retainer 330 via the nail pieces 336.

### FOURTH EMBODIMENT

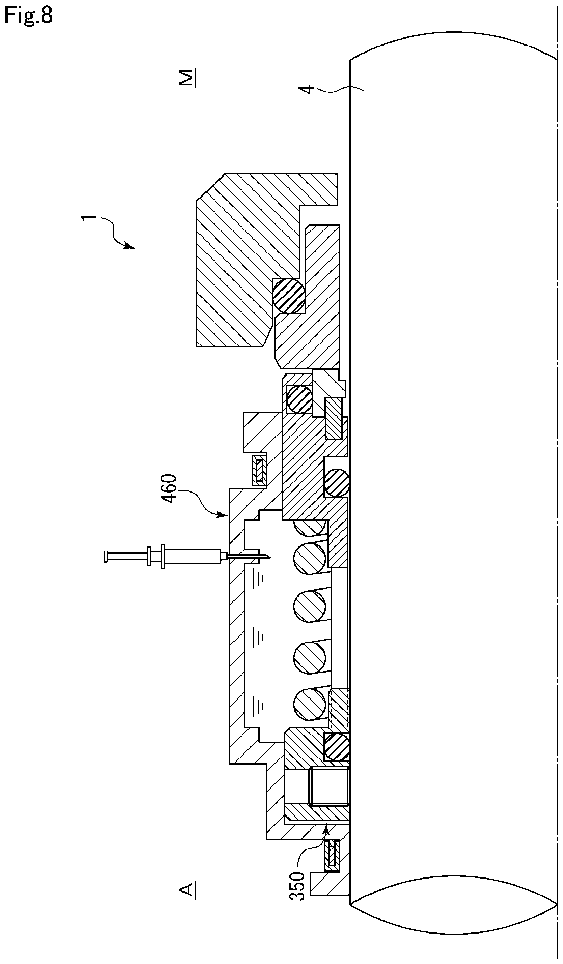

A fourth embodiment of the present invention will hereinafter be described. The fourth embodiment shown in FIG. 8 differs from the third embodiment mainly in that the rubber spring cover 460 has a cup shape. The cup shape has the same arrangement as the rubber spring cover 260 of the second embodiment. Other arrangements identical to those in the first and third embodiments will not be described.

### FIFTH EMBODIMENT

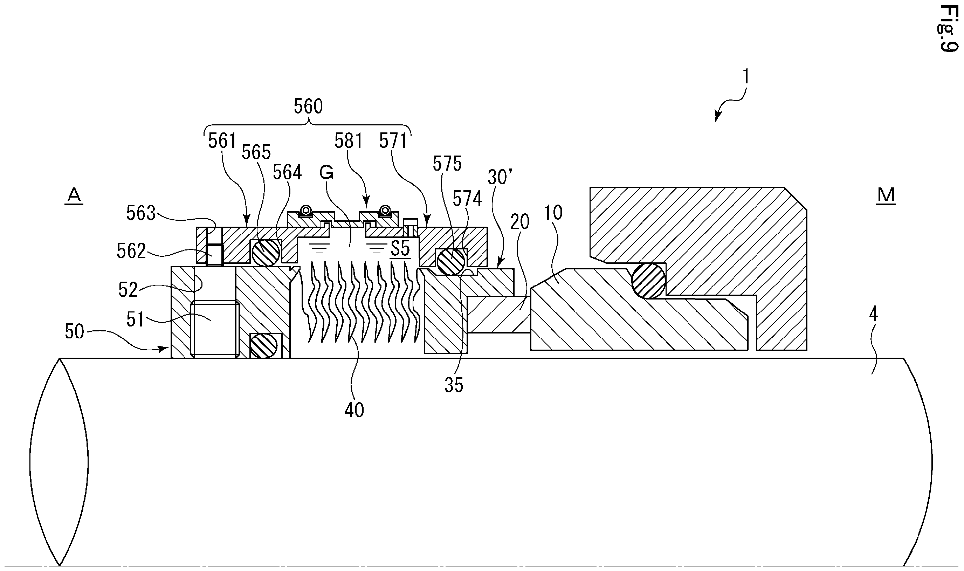

A fifth embodiment of the present invention will hereinafter be described. The fifth embodiment shown in FIG. 9 differs from the first embodiment mainly in that the seal cover is a joint spring cover in which multiple cylindrical members are joined.

A joint spring cover 560 is in a so-called cantilevered form in which three portions, that is, an annular cylinder 561 (annular rigid body), an annular rubber body 581 (annular elastic body), and an annular cylinder 571 (annular rigid body) are joined mainly from the outside A in the axial direction of the rotary shaft 4. The annular cylinders 561, 571 are formed of metal such as stainless steel to have an approximately cylindrical shape, while the annular rubber body 581 is a molded item of silicone rubber having an approximately cylindrical shape. The airtight space S5 between an inner periphery of the joint spring cover 560 and the outer periphery of the bellows 40 is filled with grease G (filler fluid), and the inner peripheral side of the bellows 40 is in an atmosphere of the inside M. It is noted that the airtight space S5 is defined by the outer periphery of the bellows 40, a portion of the seal ring retainer 30', an O-ring 575 (secondary seal), a portion of the inner periphery of the joint spring cover 560, an O-ring 565 (secondary seal), and a portion of the collar 50.

The annular cylinder 561 is fixed with a set screw 562 threadably fitted into a screw hole 563 therein not to rotate with respect to the collar 50. The O-ring 565 is mounted in a recessed portion 564 recessed toward the outer diameter side in an inner periphery of the annular cylinder 561 and on an axially inner side of the seal ring 20 than the set screw 562 to provide sealing between the annular cylinder 561 and the collar 50.

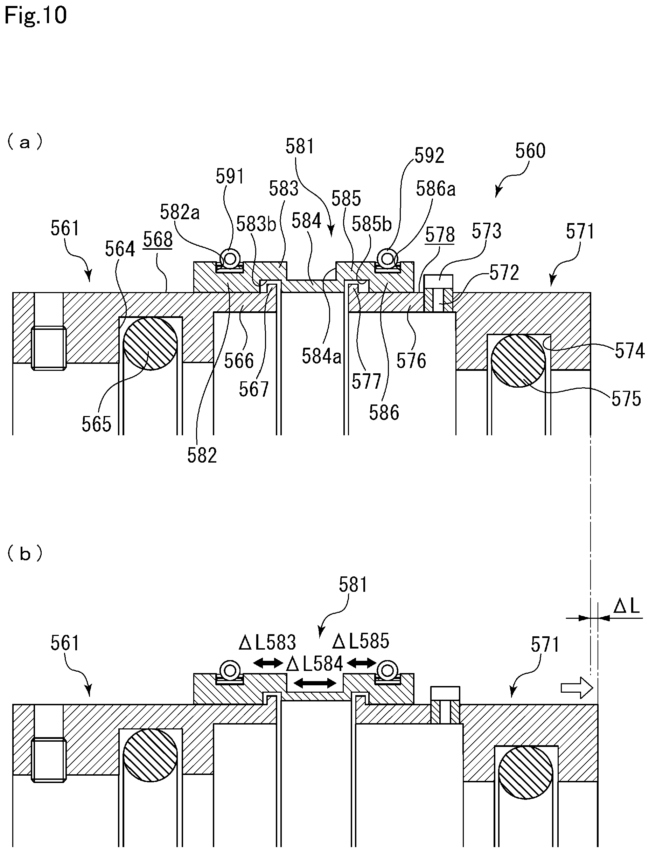

The O-ring 575 is mounted in an annular recessed portion 574 recessed toward the outer diameter side in an inner periphery of the annular cylinder 571 to provide sealing between the annular cylinder 571 and the seal ring retainer 30'. The O-ring 575 is held in a manner sandwiched between a bottom surface of the annular recessed portion 35 of the seal ring retainer 30' and a bottom surface of the annular recessed portion 574 of the annular cylinder 571, which are opposed to each other. Referring to FIG. 10, the annular cylinder 571 is also provided with a radially penetrating a through hole 572 (filling port), the through hole 572 being constantly sealed with a sealing bolt 573. Removing the sealing bolt 573 allows the airtight space S to be filled with grease G through the through hole 572. It is noted that a thickened portion similar to that in the first embodiment may be provided in the annular rubber body 581 instead of the through hole 572 to inject grease by a grease injector having an injection needle.

The annular rubber body 581 is an integrally molded item in which a thickened fixed portion 582, a thickened bridged portion 583 (cylindrical portion parallel to the axis), a thinned bridged portion 584 (cylindrical portion parallel to the axis), a thickened bridged portion 585 (cylindrical portion parallel to the axis), and a thickened fixed portion 586 are joined from the outside A in the axial direction of the rotary shaft 4. Annular band grooves 582a, 586a recessed toward the inner diameter side are formed in an outer periphery of the respective thickened fixed portions 582, 586, annular loosely-fitting grooves 583b, 585b recessed toward the outer diameter side are formed in an inner periphery of the respective thickened bridged portions 583, 585, and a recessed groove 584a recessed toward the inner diameter side is formed in an outer periphery of the thinned bridged portion 584.

The both ends of the annular rubber body 581 are arranged and temporarily fixed, respectively, at an end portion 566 of the annular cylinder 561 and an end portion 576 of the annular cylinder 571, clamping bands 591, 592 (bands) are mounted and fastened in the respective annular band grooves 582a, 586a, resulting in that the fixed portions 582, 586 are attached, respectively, to an outer peripheral surface 568 of the annular cylinder 561 and an outer peripheral surface 578 of the annular cylinder 571 in a liquid-tight manner. This can provide sealing between the annular rubber body 581 and the annular cylinders 561, 571 only through fastening by the clamping bands 591, 592, with a simplified structure.

In a state where the mechanical seal 1 is assembled into the rotary machine (the state shown in FIG. 10 (a)), the flange portions 567, 577 are axially and loosely fitted into the respective annular loosely-fitting grooves 583b, 585b in a radially contactless state, and the thinned bridged portion 584 is arranged between the flange portions 567, 577 in the axial direction of the rotary shaft 4. It is noted that the length of axial loose fitting of the flange portions 567, 577 into the respective annular loosely-fitting grooves 583b, 585b is preferably set greater than the maximum length of axial wear of the mating ring 10 and/or the seal ring 20 in the axial direction of the rotary shaft 4.

Upon usage of the mechanical seal 1, when the mating ring 10 and/or the seal ring 20 undergoes wear, for example, the seal ring 20 and the seal ring retainer 30' moves a short length ΔL as the bellows 40 expands slightly (to be a state shown in FIG. 10 (b)). Here, the annular rubber body 581 is designed to be elastically deformed with a force smaller than the static frictional force between the O-ring 575 and the annular recessed portions 35, 574. Accordingly, with the movement above, the annular cylinder 571 also moves toward the mating ring 10 by ΔL. On the other hand, the annular cylinder 561, which is mounted fixedly in the axial direction, does not move.

As a result, an axial tensile force acts on the annular rubber body 581 with the portions fastened by the clamping bands 591, 592 serving as a site of action, resulting in that the thickened bridged portion 583, the thinned bridged portion 584, and the thickened bridged portion 585 expand in the axial direction. Upon this, the difference in the radial length (thickness) causes the expansion amount ΔL584 of the thinned bridged portion 584 to be greater than the expansion amountΔL583, ΔL585 of the thickened bridged portions 583, 585. Since the annular rubber body 581 thus expands, the expanding function of the bellows 40 cannot be impaired.

On the other hand, even when a radial external force may act on the joint spring cover 560, the annular rubber body 581 itself is deformed in the radial direction, and therefore a force hardly acts on the annular cylinder 561 to result in an inclination with respect to the axis.

As described heretofore, the joint spring cover 560 can thus be composed of three members, that is, the two annular cylinders 561, 571 and the annular rubber body 581, the joint spring cover 560 can be mounted and dismounted easily. The joint spring cover 560 can also be mounted with no significant change in, for example, the shape of each component of a conventional mechanical seal.

Also, the bridged portions 583, 584, 585 of the annular rubber body 581 each have a cylindrical shape parallel to the axis. This cannot be axially concavo-convex even when extending in the axial direction of the rotary shaft 4, so that no foreign matter can be caught in the bridged portions 583, 584, 585.

Also, in a state where the flange portions 567, 577 of the annular cylinders 561, 571 are axially and loosely fitted into the respective annular loosely-fitting grooves 583b, 585b of the annular rubber body 581, the annular rubber body 581 is fixed to the annular cylinders 561, 571 closer to the axial end portion than the annular loosely-fitting grooves 583b, 585b. With this arrangement, when the annular rubber body 581 expands in the axial direction of the rotary shaft 4, the flange portions 567, 577 can move axially within the annular loosely-fitting grooves 583b, 585b, whereby it is possible to ensure an extended area within which the annular rubber body 581 expands, and also the flange portions 567, 577 serve as an axial retainer for the annular rubber body 581.

Also, the joint spring cover 560 is fixed by a set screw 562 mountably and dismountably to the collar 50, the O-ring 565 is arranged between the joint spring cover 560 and the collar 50, and the O-ring 575 is further arranged between the joint spring cover 560 and the seal ring retainer 30'. This allows the joint spring cover 560 to be mounted and dismounted to/from the collar 50 and the seal ring retainer 30', whereby the mechanical seal 1 can be assembled and disassembled at high workability.

Also, since the joint spring cover 560 has a cylindrical shape, the outer periphery is less concavo-convex and therefore, upon rotation, the joint spring cover 560 can hardly be a rotational resistance.

Also, since the annular cylinders 561, 571 of the joint spring cover 560 are made of metal, heat transferred through the grease G (e.g. heat generated due to sliding between the mating ring 10 and the seal ring 20) can be dissipated efficiently through the joint spring cover 560.

It is noted that while the annular cylinders 561, 571 made of stainless steel are described as an example of the annular rigid bodies in the fifth embodiment , the material is not limited to metal but may be, for example, fiber reinforced plastic (FRP) as long as it is rigid.

Also, while the annular cylinder 561 on the collar 50 side of the joint spring cover 560 is fixed mountably and dismountably to the collar 50 in the above-described embodiments, the annular cylinder 561 and the collar 50 may be formed integrally.

Also, the annular cylinder 571 on the seal ring 20 side of the joint spring cover 560, which is connected via the O-ring 575 to the seal ring retainer 30' in the above-described embodiments, may be connected via the O-ring to another member on the seal ring 20 side (e.g. the seal ring 20). Further, the annular cylinder 571 may be fixed by, for example, a set screw to a member on the seal ring 20 side in a non-rotatable and axially immovable manner.

While the embodiments of the present invention have heretofore been described with reference to the accompanying drawings, specific arrangements are not limited to these embodiments, and variations and/or additions would be encompassed in the present invention without departing from the spirit of the invention.

For example, while the first to fifth embodiments above have exemplarily described an outside type one in which leakage of sealed fluid to the outer diameter side is inhibited, a so-called inside type one may alternatively be employed in which the fluid is sealed fluid.

Also, while the first to fifth embodiments have exemplarily described a rotary type one in which the spring such as the bellows or the coil spring is provided on the rotary shaft side, a stationary type one may alternatively be employed in which the spring is provided on the non-rotational member such as the housing of the rotary machine. In the case of such a stationary type one, it is only required that the spring cover is mounted from radially inside over the spring that is provided on the non-rotational member such as the housing.

Also, while the first to fifth embodiments have exemplarily described that both the mating ring and the seal ring are formed of hard sliding material (e.g. ceramics such as SiC), the material is not limited thereto. For example, the mating ring may be formed of hard sliding material, while the seal ring may be formed of carbon sliding material.

Also, while the first to fourth embodiments and the fifth embodiment have exemplarily described the annular elastic body made of silicone rubber, respectively, as the rubber spring cover and the annular rubber body, any elastic member may alternatively be employed as long as expandable in the axial direction more easily than the annular rigid bodies. Further, the annular elastic body is made of silicone rubber, which is highly heat-resistant and weather-resistant, in the above-described examples, the material is not limited thereto, but may be, for example, SBR (styrene butadiene rubber), BR (butadiene rubber), CR (chloroprene rubber), IR (isoprene rubber), IIR (isobutylene isoprene rubber), EPM, EPDM (ethylene propylene rubber), epichlorohydrin rubber (CO, ECO).

Also, in the first to fifth embodiments, each O-ring serving as a secondary seal may employ another sealing means.

Also, while the first to fifth embodiments have exemplarily described the clamping bands as bands, any member may alternatively be employed as long as capable of exerting a circumferentially fastening force, such as a garter spring.

It is noted that while the first to fourth embodiments have exemplarily described by a rotary mold to manufacture the rubber spring cover, a split mold or a 3D printer may alternatively be employed for manufacturing. The same applies to the manufacturing of the annular rubber body in the fifth embodiment. In addition, the rubber spring cover and the annular rubber body may have various other shapes.

Also, while the first to fifth embodiments have exemplarily described that the airtight space is filled with grease, the space may alternatively be filled with fluid other than grease, such as oil or water. In a further aspect, the space may not be filled with liquid.

### {REFERENCE SIGNS LIST}

- 1: Mechanical seal
- 2: Housing
- 4: Rotary shaft
- 10: Mating ring (stationary sealing ring)
- 20: Seal ring (rotary sealing ring)
- 30, 30': Seal ring retainer
- 40: Bellows (spring)
- 60: Rubber spring cover (annular elastic body)
- 61: Fixed portion
- 62: Expanding/retracting portion (cylindrical portion)
- 63: Fixed portion
- 65: Clamping band (band)
- 67: Clamping band (band)
- 70: Thickened portion (filler fluid injecting portion)
- 71: Thickened portion (filler fluid injecting portion)
- 72: Thickened portion (filler fluid injecting portion)
- 260: Rubber spring cover (annular elastic body)
- 266: Clamping band (band)
- 267: Clamping band (band)
- 460: Rubber spring cover (annular elastic body)
- 560: Joint spring cover
- 561: Annular cylinder (annular rigid body)
- 562: Set screw
- 563: Screw hole
- 565: O-ring (secondary seal)
- 567: Flange portion
- 571: Annular cylinder (annular rigid body)
- 572: Through hole (filling port)
- 575: O-ring (secondary seal)
- 577: Flange portion
- 581: Annular rubber body (annular elastic body)
- 582: Fixed portion
- 582a: Annular band groove
- 583: Bridged portion (cylindrical portion)
- 583b: Annular loosely-fitting groove (groove portion)
- 584: Bridged portion (cylindrical portion)
- 585: Bridged portion (cylindrical portion)
- 585b: Annular loosely-fitting groove (groove portion)
- 586: Fixed portion
- 586a: Annular band groove
- 591: Clamping band (band)
- 592: Clamping band (band)
- A: Outside of the machine
- M: Inside of the machine
- G: Grease (filler fluid)
- S: Airtight space
- S2: Airtight space

## Claims

1. A mechanical seal comprising:
a housing through which a rotary shaft of a rotary machine is inserted;
a stationary sealing ring held on the housing;
a rotary sealing ring that is rotatable together with the rotary shaft and comes into sliding contact with the stationary sealing ring;
a spring configured to axially urge the stationary sealing ring and the rotary sealing ring to a pressurized state; and
a spring cover formed into an annular shape, covering the spring in an axially sealed manner on an outer diameter side or an inner diameter side and at least having an annular elastic body formed in an elastically deformable manner.

2. The mechanical seal according to claim 1, wherein the spring cover is formed by an annular elastic member.

3. The mechanical seal according to claim 1, wherein the spring cover has two annular rigid bodies arranged in an axially spaced manner, in addition to the annular elastic body, the annular elastic body being provided between and hermetically connected to the two annular rigid bodies, the two annular rigid bodies being sealed with a secondary seal on each end portion of the spring.

4. The mechanical seal according to claim 3, wherein the annular rigid bodies each has a flange portion extending in a radial direction, and the annular elastic body has two groove portions each loosely fitting to the flange portion of each of the annular rigid bodies in the axial direction of the rotary shaft and is fixed to the annular rigid bodies axially outward of the groove portions.

5. The mechanical seal according to any one of claims 1 to 4, wherein both end portions of the annular elastic body is fixed to the annular rigid bodies by a band.

6. The mechanical seal according to any one of claims 1 to 5, wherein the annular elastic body has a cylindrical portion parallel to an axis of the rotary sealing ring.

7. The mechanical seal according to any one of claims 1 to 6, wherein a space between the spring cover and the spring is filled with filler fluid such as oil, grease, or water.

8. The mechanical seal according to claim 7, wherein the annular elastic body is provided with an injection portion that is radially thickened and allows filler fluid to be injected into the annular elastic body.

9. The mechanical seal according to any one of claims 1 to 8, wherein the spring and the spring cover are provided on the outside of the rotary machine.

10. The mechanical seal according to any one of claims 1 to 9, wherein one end of the spring cover is fixed in a liquid-tight manner to the rotary machine or the housing.

11. The mechanical seal according to any one of claims 1 to 10, wherein the annular elastic body is made of rubber.
